(19) Europäisches Patentamt / European Patent Office / Office européen des brevets

(11) **EP 3 068 635 B1**

(12) **FASCICULE DE BREVET EUROPEEN**

(45) Date de publication et mention
de la délivrance du brevet:
**06.12.2017 Bulletin 2017/49**

(21) Numéro de dépôt: **14793234.7**

(22) Date de dépôt: **02.10.2014**

(51) Int Cl.:
***B60C 23/06*** (2006.01)

(86) Numéro de dépôt international:
**PCT/FR2014/052497**

(87) Numéro de publication internationale:
**WO 2015/071556 (21.05.2015 Gazette 2015/20)**

(54) **PROCEDE D'AIDE A LA DECISION PAR LOGIQUE FLOUE DANS UN SYSTEME DE SURVEILLANCE DE LA PRESSION DES PNEUMATIQUES D'UN VEHICULE AUTOMOBILE**

**AUF FUZZY-LOGIK BASIERENDES ENTSCHEIDUNGSUNTERSTÜTZUNGSVERFAHREN ZUR ÜBERWACHUNG EINES KRAFTFAHRZEUGREIFENDRUCKS**

**FUZZY-LOGIC-BASED DECISION SUPPORT METHOD IN A SYSTEM FOR MONITORING MOTOR VEHICLE TYRE PRESSURE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2013 FR 1361107**

(43) Date de publication de la demande:
**21.09.2016 Bulletin 2016/38**

(73) Titulaire: **Renault S.A.S.**
**92100 Boulogne-Billancourt (FR)**

(72) Inventeurs:
• **PITA-GIL, Guillermo**
  **F-75014 Paris (FR)**
• **SAINT-LOUP, Philippe**
  **F-78760 Jouars Pontchartrain (FR)**
• **DAVINS-VALLDAURA, Joan**
  **F-75014 Paris (FR)**

(56) Documents cités:
**JP-A- H06 320 923     US-A1- 2007 061 100**

**Description**

La présente invention concerne le domaine du diagnostic de l'état de gonflage des pneumatiques équipant des roues d'un véhicule automobile. Plus particulièrement, l'invention concerne les méthodes conduisant à une détection indirecte d'un état de gonflage des pneumatiques.

Un état de gonflage défaillant d'un pneumatique, autrement dit un sous-gonflage de ce pneumatique, se caractérise par une baisse de pression du pneumatique par rapport à une pression normale de celui-ci, étant entendu que les cas de sous-gonflage englobent les cas de crevaison. Or, un état de gonflage défaillant d'un pneumatique peut provoquer l'éclatement de celui-ci, dans certaines conditions de conduite, mettant gravement en danger la sécurité des personnes embarquées dans le véhicule. Même en l'absence d'éclatement, un sous-gonflage présente l'inconvénient d'accroître la consommation de carburant du véhicule et la rapidité d'usure du pneumatique.

C'est pourquoi, une règlementation en cours d'adoption à l'échelle mondiale impose d'équiper progressivement tous les nouveaux véhicules automobiles de systèmes de surveillance de la pression des pneumatiques ou SSPP. La majorité de ces systèmes utilisent des capteurs de pression installés sur chaque pneumatique pour transmettre une information sur la pression des pneumatiques en temps réel à l'unité de contrôle moteur ou à une unité de calcul spécifique du véhicule pour traitement et prise en compte de cette information parmi divers phénomènes dynamiques susceptibles d'affecter eux aussi, de manière transitoire par exemple, la pression dans les pneumatiques. En cas de sous-gonflage, le système est conçu pour transmettre automatiquement un message d'alerte au conducteur, par exemple sous la forme d'un affichage sur le tableau de bord. Ce type de système nécessite toutefois d'intégrer aux pneumatiques un équipement de mesure relativement coûteux.

Par opposition avec ce premier type de système SSPP, un second type de système SSPP, dit SSPP indirect, se caractérise par l'absence de capteurs de pression et repose sur une estimation par des algorithmes appropriés de la probabilité de sous-gonflage de chaque pneumatique sur une plage de vitesse donnée, ainsi que d'un taux de confiance associé à cette probabilité, dépendant du temps passé dans la plage de vitesse, à partir de l'étude de la vitesse des roues du véhicule. La probabilité représente les chances en pourcentage d'être dans un état de sous-gonflage pour une roue donnée. Cette valeur est calculée en instantanée sur quelques périodes d'échantillonnage. Le taux de confiance représente un facteur d'oubli nécessaire au changement de plage de vitesse.

Même si ce second type de système de surveillance peut facilement être mis en oeuvre par exemple à partir des valeurs de vitesse de rotation des roues estimées ou mesurées par les capteurs du contrôle d'antiblocage des roues, il est toutefois moins précis que les systèmes de surveillance directs. En effet, en raison de l'absence de capteurs de pression, le nombre de fausses alertes de détection de sous-gonflage est susceptible d'augmenter car la probabilité estimée par les algorithmes dépend du temps de roulage, de l'apprentissage et de leur fiabilité à toutes les situations.

Les systèmes de surveillance indirects reposent plus précisément soit sur une analyse du rayon de roulement de la roue, soit sur une analyse des vibrations de la roue. L'analyse du rayon de la roue est mise en oeuvre par les systèmes de surveillance indirects qui reposent sur un algorithme basé sur l'étude de l'écart de vitesse entre chacune des roues. L'effet ici exploité tient au fait qu'un sous-gonflage d'un pneumatique induit une variation du rayon de roulement et donc de la vitesse angulaire. Ainsi, dès qu'un écart de vitesse entre des roues s'accroît, un problème de sous-gonflage est remonté. On connaît par exemple du document de brevet FR2927018 un système de surveillance indirect de l'état de gonflage des pneumatiques, mettant en oeuvre un tel algorithme de calcul comportant une mesure des vitesses angulaires des roues du véhicule, un calcul de plusieurs critères de comparaison des vitesses angulaires mesurées des roues et une analyse des critères calculés pour détecter l'état de gonflage de chaque roue du véhicule. La validité de ces critères, basés sur l'étude de l'écart des vitesses angulaires mesurées entre chacune des roues, est importante dans la mesure où de nombreux phénomènes dynamiques sont susceptibles de provoquer des variations non homogènes parmi les rayons de roulement des roues et ainsi augmenter de taux de fausses alertes concernant un état défectueux des pneumatiques. L'algorithme est alors conçu pour s'assurer qu'une disparité parmi les vitesses angulaires mesurées des roues présente une probabilité forte de traduire un état de gonflage défectueux d'au moins un des pneumatiques équipant le véhicule. La performance de cet algorithme dépend cependant du nombre de roues qui sont dégonflées. Ainsi, si un tel algorithme possède de bonnes performances lorsque la situation du véhicule correspond à une crevaison (dégonflage d'une roue), il n'est pas suffisamment performant dans les cas de diffusion (dégonflage lent de plusieurs roues).

L'analyse de la vibration de la roue est quant à elle mise en oeuvre par les systèmes de surveillance indirects fondés sur un algorithme qui repose sur l'étude spectrale de la vitesse de roue afin de surveiller des modes spécifiques. L'effet ici exploité tient au fait que les caractéristiques spectrales (par exemple, la distribution d'énergie dans différentes bandes de fréquences) d'un signal de vitesse angulaire de roue dépendent de la pression du pneumatique. Ainsi, si les modes surveillés sortent des gabarits qui leur sont propres, le système en déduit un problème de sous-gonflage. On connaît par exemple du document de brevet WO2012127139 un système de détection indirecte de l'état de gonflage des pneumatiques mettant en oeuvre un tel algorithme. Contrairement à l'algorithme précédent, qui repose sur l'analyse du rayon de roulement, cet algorithme exploitant l'étude spectrale du signal de vitesse angulaire de roue possède de bonnes performances dans les cas de diffusion (dégonflage lente de plusieurs roues), tandis qu'il n'est pas suffisamment performant pour les cas de crevaison (dégonflage d'une roue).

Il s'avère ainsi que les performances de chacun des algorithmes selon les deux méthodes d'analyse mises en oeuvre par les systèmes de surveillance indirects, dépendent du nombre de roues qui sont dégonflées.

Le brevet US2007061100 décrit un système de surveillance de la pression des pneumatiques mettant en oeuvre les deux méthodes d'analyses ci-dessus exposées, basées respectivement sur l'analyse du rayon de la roue et sur l'analyse de la vibration de la roue, dans lequel l'estimation de l'état de gonflage pour chaque pneumatique est basée à la fois sur les valeurs de sortie de l'algorithme selon la méthode d'analyse du rayon de la roue et sur les valeurs de sortie de l'algorithme selon la méthode d'analyse de la vibration des roues, de façon à compenser les carences individuelles des algorithmes selon les deux méthodes d'analyse. Plus précisément, on calcule, pour chaque pneumatique, une première valeur de probabilité de sous-gonflage issue de la valeur de sortie de l'algorithme selon la méthode d'analyse du rayon de la roue et une seconde valeur de probabilité de sous-gonflage issue de la valeur de sortie de l'algorithme selon la méthode d'analyse de la vibration de la roue, chaque valeur de probabilité étant indicative d'un écart entre la valeur de sortie et une valeur nominale et étant une fonction de répartition cumulative de probabilité. De là, l'estimation de l'état de gonflage pour chaque pneumatique est calculée à partir du produit des première et seconde valeurs de probabilité de sous-gonflage. Cette méthode de fusion des différentes valeurs de probabilité issues des algorithmes selon les deux méthodes d'analyse différentes n'est toutefois pas optimale.

Le document JPH06320923 vise à détecter la baisse de pression d'une roue de véhicule en utilisant un module de logique floue, activé lorsque le véhicule a atteint une vitesse minimum, que l'accélération et l'angle au volant sont quasi-nuls, et qui reçoit en entrée les sommes des variations de vitesse des roues diagonalement opposées ainsi que les différences des variations de vitesse sur un même essieu.

Un but de l'invention est de proposer un procédé d'estimation en temps réel de l'apparition d'un défaut de pression sur au moins un pneumatique équipant des roues d'un véhicule automobile, capable de fusionner les données issues des algorithmes selon les deux méthodes d'analyse des vitesses de roue exposées plus haut et d'améliorer la robustesse de l'estimation dans les cas de dégonflage en tenant compte des performances des deux algorithmes en particulier selon les plages de vitesses des roues.

A cette fin, l'invention a pour objet un procédé d'estimation de l'apparition d'un défaut de pression sur au moins un des pneumatiques équipant des roues d'un véhicule automobile, ladite estimation résultant d'une analyse des vitesses angulaires des roues selon un premier algorithme basé sur une analyse de l'écart de vitesses entre chacune des roues et selon un deuxième algorithme basé sur une analyse spectrale de la vitesse de roue, dans lequel chacun des premier et deuxième algorithmes fournit, pour chaque roue, des valeurs de probabilité de sous-gonflage définies pour chaque plage de vitesse d'une pluralité de plages de vitesse de la roue et un taux de confiance associé à chaque valeur de probabilité fournie dépendant du temps de roulage de la roue dans la plage de vitesse concernée, ledit procédé étant caractérisé en ce qu'il utilise un module de décision basé sur la théorie des sous-ensembles flous dont les signaux d'entrée sont les valeurs de probabilité de sous-gonflage issues du premier et du second algorithme ainsi que les taux de confiance associés appliqués à chaque plage de vitesse, ledit module de décision fournissant en sortie une valeur de probabilité robuste indicative dudit défaut de pression prenant en compte toutes les plages de vitesse pour chaque roue et chaque algorithme.

Avantageusement, le procédé comprend une étape de fusion des valeurs de probabilité de sous-gonflage et de taux de confiance associés issues du premier et du second algorithme, utilisant un premier processus de logique floue pour déterminer des valeurs de probabilité robuste intermédiaire pour une plage de vitesse donnée et une roue donnée ayant intégrées les valeurs de taux de confiance, respectivement pour chaque couple de valeurs de probabilité et de taux de confiance associé issu du premier algorithme et pour chaque couple de valeurs de probabilité et de taux de confiance associé issu du deuxième algorithme.

De préférence, le procédé comprend une étape de sélection consistant à sélectionner la valeur de probabilité robuste intermédiaire maximum pour chaque algorithme afin de déterminer lesdites valeurs de probabilité robuste prenant en compte toutes les plages de vitesse pour chaque roue et chaque algorithme.

Avantageusement, le procédé comprend une étape de fusion des valeurs de probabilité robuste estimées à partir des premier et deuxième algorithmes, ladite étape de fusion utilisant un deuxième processus de logique floue fournissant en sortie une valeur de probabilité robuste fusionnée pour chaque roue.

Avantageusement, le procédé comprend une étape consistant à définir des relations à paramètres flous, destinées à être utilisées dans le deuxième processus de logique floue pour pondérer la fusion des valeurs de probabilité robuste en fonction de paramètres de mise au point représentant les poids respectifs des premier et deuxième algorithmes dans l'estimation de chaque situation du véhicule en termes de nombre de roues ayant un défaut de pression pneumatique.

Avantageusement, la valeur de probabilité robuste fusionnée pour chaque roue est utilisé pour diagnostiquer l'état de gonflage des pneumatiques de chaque roue du véhicule.

L'invention concerne également un système de surveillance de la pression des pneumatiques équipant les roues d'un véhicule automobile du type comportant un premier algorithme d'estimation de l'apparition d'un défaut de pression sur au moins un des pneumatiques basé sur une analyse de l'écart de vitesses entre chacune des roues et un deuxième algorithme d'estimation de l'apparition d'un défaut de pression sur au moins un des pneumatiques basé sur une analyse spectrale de la vitesse de roue, chacun des premier et deuxième algorithmes étant adapté pour fournir pour chaque roue du véhicule, des valeurs de probabilité de sous-gonflage définies pour chaque plage de vitesse d'une pluralité de plages de vitesse de la roue et un taux de confiance associé à chaque valeur de probabilité fournie dépendant du temps de roulage de la roue dans la plage de vitesse concernée, ledit système étant caractérisé en ce qu'il comprend un module de décision basé sur la théorie des sous-ensembles flous dont les signaux d'entrée sont les valeurs de probabilité de sous-gonflage issues du premier et du deuxième algorithme ainsi que les taux de confiance associés, ledit module de décision étant apte à fournir une valeur de probabilité robuste indicative dudit défaut de pression prenant en compte toutes les plages de vitesse pour chaque roue et chaque algorithme.

Avantageusement, le module de décision comprend des moyens de fusion des valeurs de probabilité robuste estimées à partir des premier et deuxième algorithmes, lesdits moyens de fusion utilisant un deuxième processus de logique floue fournissant en sortie une valeur de probabilité robuste fusionnée pour chaque roue.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 est un schéma illustrant la structure générale du module de décision en logique floue mis en oeuvre dans le procédé d'estimation selon l'invention;
- la Figure 2 est un schéma illustrant le fonctionnement d'un premier processus de logique floue implémenté dans une première phase dite de prétraitement, mise en oeuvre par le module de décision;
- la Figure 3 est un schéma illustrant le fonctionnement d'un deuxième processus de logique floue implémenté dans une deuxième phase dite de fusion, mise en oeuvre par le module de décision;

On souhaite donc caractériser de façon robuste l'apparition d'un défaut de pression sur au moins un des pneumatiques équipant les roues du véhicule en répondant à la question de savoir si l'un des pneumatiques présente un état de gonflage défaillant compte tenu des valeurs de probabilité et de confiance fournies pour chaque pneumatique et par plage de vitesse, par les deux algorithmes travaillant respectivement selon la méthode d'analyse de l'écart de vitesse angulaire entre chacune des roues et selon la méthode d'analyse spectrale de la vitesse de roue. Selon l'invention, il a été validé que l'apport de la logique floue, qui s'appuie sur la théorie mathématique des sous-ensembles flous, pour la réalisation de cette caractérisation est particulièrement pertinente. Elle présente en effet l'intérêt d'être plus facile et moins coûteuse à implémenter qu'une logique probabiliste dans la mesure où, en particulier, les fonctions utilisées dans le processus de logique floue qui sera détaillé plus loin sont des droites simples et des opérations de calcul basiques. Elle autorise en outre différents degrés d'énoncés de réponse à la question de savoir si l'un des pneumatiques présente un état de gonflage défaillant, de façon à pouvoir s'adapter aux valeurs de probabilité et de confiance sur toutes les plages de vitesse des quatre roues et des deux algorithmes à chaque instant d'échantillonnage. Egalement, une famille de paramètres de mise au point limités en nombre permet à un même module de décision de s'adapter à différentes conditions de validité de la décision en incarnant des logiques plus ou moins strictes. La mise en oeuvre d'un nombre limité de paramètres pour la mise au point du module de décision est particulièrement avantageuse, notamment en termes de gain de temps, car il est nécessaire d'appliquer la mise au point du module de décision à toutes les roues du véhicule et pour les deux algorithmes.

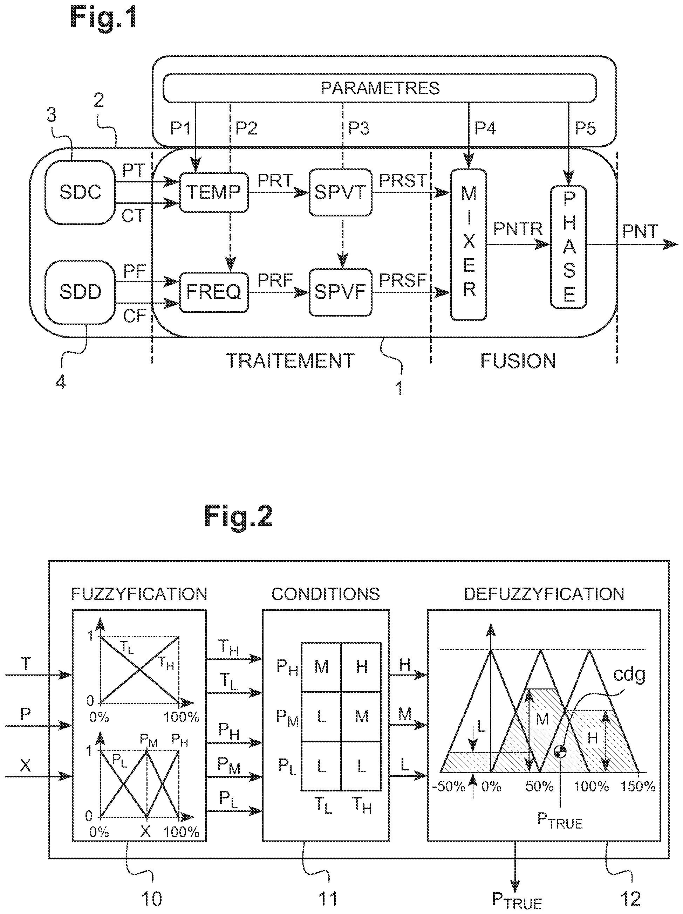

Le procédé d'estimation de l'apparition d'un défaut de pression sur un des pneumatiques selon l'invention met donc en oeuvre un module de décision 1 basé sur la théorie des sous-ensembles flous dont la structure générale de fonctionnement est illustrée en référence à la figure 1. Le module de décision 1 reçoit en tant que signaux d'entrée les données issues du système de surveillance de la pression des pneumatiques indirect 2 implémentant un premier algorithme 3 basé sur l'analyse de l'écart de vitesse entre les roues et un second algorithme 4 basé sur l'analyse spectrale de la vitesse de roue. En particulier le module de décision 1 reçoit d'une part, les valeurs de probabilité de sous-gonflage PT et de taux de confiance CT associées à ces valeurs de probabilité PT issues du premier algorithme 3 et, d'autre part, les valeurs de probabilité PF et de taux de confiance CF associées à ces valeurs de probabilité PF issues du second algorithme 4. Les valeurs de taux de confiance fournies par les deux algorithmes prennent en compte le temps de roulage dans chaque plage de vitesse considérée. Ainsi, si le véhicule roule dans une plage de vitesse donnée, le taux de confiance associé à la valeur de probabilité de sous-gonflage des roues dans cette plage de vitesse augmente, tandis que le taux de confiance associé aux autres valeurs de probabilité diminue. Le module de décision reçoit également en entrées des paramètres de mise au point du module de décision, respectivement P1, P2, P3, P4 et P5.

Plus précisément, les entrées du module de décision 1 sont :

PTij = probabilités de crevaison issues du premier algorithme 3, i variant de 1 à 4 (un index pour chaque roue) et j variant de v1 à vn (un index par plage de vitesse) ;

PFij = probabilités de crevaison issues du second algorithme 4, i variant de 1 à 4 (un index pour chaque roue) et j variant de v1 à vn (un index par plage de vitesse) ;

CTij = taux de confiance associé à PTij, qui dépend du temps de roulage passé dans la plage de vitesse vj ;

CFij = taux de confiance associé à PFij, qui dépend du temps de roulage passé dans la plage de vitesse vj.

En vue de fusionner correctement les données issues des deux algorithmes, le module de décision 1 met préalablement en oeuvre une phase de prétraitement de ces données (partie « TRAITEMENT » sur la figure 1) pour simplifier le problème à résoudre, étant donné le trop grand nombre de données d'entrée empêchant de les fusionner directement. Cette phase de prétraitement comprend une première étape, correspondant aux blocs référencés TEMP et FREQ sur la figure 1, consistant à fusionner les valeurs de probabilité et de confiance, c'est-à-dire les variables PT et CT, d'une part et les variables PF et CF d'autre part d'une part, de manière à opérer un traitement des valeurs de probabilité issues des deux algorithmes avec les valeurs de confiance. Pour ce faire, le module de décision 1 utilise dans cette première étape un premier processus de logique floue mis en oeuvre de la même façon qui sera détaillé ci-après pour fusionner les valeurs de probabilité et de confiance issues respectivement du premier algorithme 3 et du second algorithme 4.

Le premier processus de logique floue utilisé dans cette première étape utilise les trois phases connues de la logique floue (fuzzification, conditions et défuzzification) représentées sur la figure 2.

Pendant le traitement du bloc TEMP, respectivement FREQ, les valeurs de probabilité et de confiance associée PT et CT, respectivement PF et CF, soumises en entrée au processus de logique floue sont d'abord transformées pour obtenir des variables linguistiques correspondantes. Ainsi, la variable P est la variable linguistique correspondant à la valeur de probabilité fournie en entrée et la variable T est la variable linguistique correspondant à la valeur de taux de confiance associée à la valeur de probabilité fournie en entrée. Les variables linguistiques ont une valeur numérique entre 0 et 1. La valeur correspond au pourcentage de coïncidence des valeurs de probabilité et de confiance associée à leur signifiant linguistique.

Un paramètre X de mise au point de valeur P1, respectivement P2 est également fourni en entrée pour le traitement du bloc TEMP, respectivement FREQ. Ce paramètre a une valeur comprise entre 0 et 1 et devra permettre d'ajuster le modèle pour les différents algorithmes et roues. Ce paramètre sera préférentiellement choisi constant pour les différentes plages de vitesse.

Ainsi, pendant le traitement du bloc TEMP, respectivement FREQ, les valeurs numériques d'entrée P, T et X sont soumises à une fuzzification en 10, puis soumises à un moteur d'inférence en 11 qui effectue la sélection et l'application de règles en fonction de conditions en vue de la résolution du problème de fusion des valeurs de probabilité et confiance associés. Le résultat du traitement effectué par le moteur d'inférence en 11 est soumis à une défuzzification en 12, ce dont il résulte une variable numérique $P_{TRUE}$ correspondant à une valeur de la probabilité dite robuste, respectivement PRT en sortie du bloc TEMP et PRF en sortie du bloc FREQ.

Suivant l'exemple de réalisation de la figure 2, s'agissant de la fuzzification en 10, si on a par exemple PTij=0.6, on positionne cette valeur sur le diagramme d'abscisse P et on obtient ainsi 3 variables linguistiques correspondantes PH, PM, PL présentant chacune une valeur entre 0 et 1 et correspondant respectivement à un niveau de probabilité haut, un niveau de probabilité moyen et un niveau de probabilité bas. Selon l'exemple de la figure 2, la valeur 0.6 positionné sur le diagramme d'abscisse P correspond à 0% de PH, 20% de PL et 80% de PM, avec toujours PH+PB+PM=100% pour chaque valeur de probabilité soumise à la fuzzification.

De même, toujours suivant l'exemple de réalisation de la figure 2, si on a par exemple CTij=0.5, on positionne cette valeur sur le diagramme d'abscisse T et on obtient ainsi 2 variables linguistiques correspondantes TH et TL présentant chacune une valeur entre 0 et 1 et correspondant respectivement à un niveau de confiance haut et à un niveau de confiance bas. Selon l'exemple de la figure 2, la valeur 0.5 positionné sur le diagramme d'abscisse T donne TH=50% et TL=50%.

Ainsi, au terme de la fuzzification en 10, chaque valeur de probabilité d'entrée PTij, respectivement PFij, est représenté par 3 valeurs correspondant aux variables linguistiques PH, PL et PM et chaque valeur de taux de confiance associé CTij, respectivement CFij, est représenté par 2 valeurs correspondant aux variables linguistiques TH et TL.

Ces variables linguistiques PH, PL, PM et TH et TL sont alors soumises au moteur d'inférence en 11, fournissant des relations directes et simples entre ces variables linguistiques représentatives de la probabilité et de la confiance, permettant de fusionner taux de confiance et probabilité et ainsi d'obtenir pour chaque couple (PTij, CTij), respectivement (PFij, CFij), trois nouvelles variables linguistiques nécessaires pour la défuzzification en 12 : H, M et L correspondant respectivement à un niveau de probabilité robuste haut, moyen et bas.

Par exemple, les règles établissant les relations entre les variables linguistiques PH, PL, PM et TH et TL en vue de déterminer les variables linguistiques H, M et L sont du type :

H = min[PH, TH]

M = max(min[PH, TL], min[PM, TH])

L = max(min[PM, TL], min[PL, TH], min [PL, TL])

Ces variables H, M et L obtenues grâce aux conditions appliquées dans le moteur d'inférence en 11 sont soumises à la défuzzification pour le calcul de la probabilité robuste $P_{TRUE}$, respectivement PRT en sortie du bloc TEMP pour chaque couple (PTij, CTij) et PRF en sortie du bloc FREQ pour chaque couple (PFij, CFij). Plus précisément, suivant l'exemple de réalisation de la figure 2, on définit un diagramme d'abscisse $P_{TRUE}$ et d'ordonnée H/M/L, avec trois triangles de sommet 1 en ordonnée et dont les bases respectives recouvrent des plages de pourcentage en abscisse se chevauchant, par exemple [-50%, 50%], [0%, 100%] et [50%, 150%], correspondant respectivement aux variables linguistiques L, M et H. Puis, on remplit le premier triangle correspondant à la variable linguistique L d'une hauteur correspondant à la valeur de la variable L prédéterminée. De même, on remplit le deuxième triangle correspondant à la variable linguistique M d'une hauteur correspondant à la valeur de la variable M prédéterminée et enfin le troisième triangle correspondant à la variable linguistique H d'une hauteur correspondant à la valeur de la variable H prédéterminée, comme illustré à la figure 2. Le calcul de la probabilité robuste $P_{TRUE}$ consiste alors à déterminer le centre de masse cdg de la surface ainsi obtenue, dont l'abscisse $P_{TRUE}$ fournit la valeur numérique de la probabilité robuste pour une plage de vitesse donnée et une roue donnée. Ainsi, en sortie des blocs TEMP et FREQ, on obtient des valeurs de probabilité robuste inntermédiaire, respectivement PRT pour chaque couple (PTij, CTij) en entrée du bloc TEMP et PRF pour chaque couple (PFij, CFij) en entrée du bloc FREQ, ayant avantageusement intégrées les valeurs de taux de confiance grâce au processus de logique floue mis en oeuvre. Le nombre de variables à traiter est avantageusement réduit de moitié.

Suite à cette première étape de fusion des valeurs de probabilité et de confiance conduisant à la détermination d'une valeur de probabilité robuste intermédiaire pour une plage de vitesse donnée et une roue donnée pour chacun des deux algorithmes, la phase de prétraitement met en oeuvre une étape de sélection des plages de vitesse, correspondant aux blocs SPVT et SPVF de la figure 1, à partir des valeurs de probabilité robuste intermédiaire PRT et PRF issues respectivement des blocs TEMP et FREQ.

L'étape de sélection de la plage de vitesse consiste à sélectionner la probabilité robuste intermédiaire maximum obtenue par la fonction de fusion des valeurs de probabilité et de confiance associée. Dit autrement, en sortie du bloc SPVT, on a PRSTi = max(PRTij) et en sortie du bloc SPVF, on a PRSFi = max(PRFij). En effet, le but du module de décision 1 est de détecter un problème de pression pneumatique. Aussi, dès lors que pour une plage de vitesse, on a une probabilité robuste intermédiaire indiquant un problème de pression pneumatique, on considère que c'est suffisant car les plages de vitesse sont indépendantes entre elles. En outre, la valeur de taux de confiance, déjà fusionnée avec la valeur de probabilité telle qu'estimée par les premier et second algorithmes, prend en compte le temps de roulage dans chaque plage de vitesse. Ainsi, grâce à cette fusion, il y toujours en sortie des blocs TEMP et FREQ des probabilités robustes intermédiaires pour une plage de vitesse donnée et une roue donnée avec une plage de vitesse correspondant à un taux de confiance élevé et d'autres avec un taux de confiance bas. Il y a donc au minimum une plage de vitesse pour laquelle la probabilité robuste intermédiaire est très fiable.

Dans cette étape, le paramètre P3 de mise au point destiné au bloc SPVF sert éventuellement de paramètre de pondération dans le cas où deux processus différents de logique floue sont utilisés dans le bloc FREQ pour les roues arrière, à partir des données issues du second algorithme 4.

La phase de prétraitement des données issues des deux algorithmes 3 et 4 mise en oeuvre par le module de décision 1 permet donc de fournir pour chaque algorithme des probabilités robustes pour une roue donnée respectivement PRSTi et PRFTi, prenant avantageusement en compte le temps de roulage dans chaque plage de vitesse, en sélectionnant la probabilité robuste intermédiaire maximum.

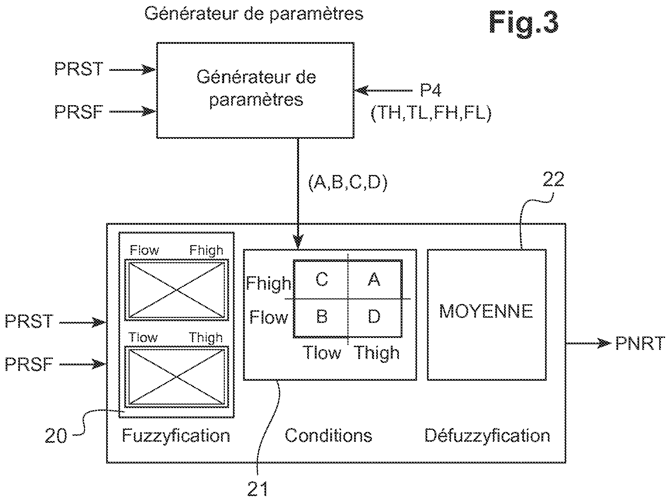

Le module de décision 1 met alors en oeuvre une phase de fusion (partie « FUSION » sur la figure 1) utilisant un deuxième processus de logique floue pour fusionner les valeurs de probabilité robuste PRST et PRSF issues de chaque algorithme et par roue. Cette phase de fusion mise en oeuvre dans le bloc référencé MIXER sur la figure 1 est décrite plus précisément en référence à la figure 3. Ainsi, la phase de fusion comprend une première étape, correspondant au bloc 5 référencé « générateur de paramètres » sur la figure 3, consistant à définir des relations à paramètres flous A, B, C, D, qui seront utilisées dans le moteur d'inférence mis en oeuvre en 21 dans le deuxième processus de logique floue. Dans cette étape, on prend en compte la situation du véhicule et, plus précisément, le nombre de roues ayant un problème de pression pneumatique, découlant des probabilités robustes de chaque algorithme et par roue, respectivement PRST et PRSF, fournies en entrée du bloc 5 générateur de paramètres. On prend également en compte dans cette étape un paramètre de mise au point P4, fourni en entrée du bloc 5 générateur de paramètres, qui regroupe 4 paramètres TL, TH, FL et FH permettant d'ajuster respectivement le poids du premier algorithme 3 dans l'estimation d'une situation sans problème de pression pneumatique, le poids du premier algorithme 3 dans l'estimation d'une situation avec problème de pression pneumatique, le poids du deuxième algorithme 4 dans l'estimation d'une situation sans problème de pression pneumatique et enfin le poids du deuxième algorithme 4 dans l'estimation d'une situation avec problème de pression pneumatique.

Par ailleurs, des relations établissant le poids des probabilités robustes obtenues de chaque algorithme 3 et 4, respectivement %TEMP et %FREQ, en fonction des situations du véhicule, peuvent par exemple être définies de la manière suivante :

- 0 roue avec problème de pression pneumatique estimée par le premier algorithme 3 : %TEMP = 0,5 et %FREQ = 0,5 ;
- 1 ou 2 roues avec problème de pression pneumatique estimée par le premier algorithme 3 : %TEMP = 0,5 + PROB/2 et %FREQ = 0,5 - PROB/2 ;
- 3 ou 4 roues avec problème de pression pneumatique estimée par le premier algorithme 3 : %TEMP = 0,5 - PROB/2 et %FREQ = 0,5 + PROB/2 ;

avec PROB : la valeur de probabilité $PT_{ij}$ maximale issue du premier algorithme 3.

On définit alors les relations suivantes :

$$A = TH*(\%TEMP) + FH* (\%FREQ)$$

$$B = TL*(\%TEMP) + FL* (\%FREQ)$$

$$C = TL*(\%TEMP) + FH* (\%FREQ)$$

$$D = TH*(\%TEMP) + FL* (\%FREQ)$$

Ces relations fournissent les paramètres flous A, B, C et D nécessaires pour la mise en oeuvre du deuxième processus de logique floue. Par exemple, si le véhicule est dans une situation de crevaison (1 roue dégonflée), le poids du premier algorithme 3 est plus grand que le poids du deuxième algorithme 4, selon les relations énoncées ci-dessus établissant le poids des probabilités robustes de chaque algorithme. Dans ce cas, la valeur des paramètres flous A, B, C, D sera pondérée d'une manière plus forte par les paramètres de mise au point représentant le poids du premier algorithme 3, soient par les paramètres TL et TH.

Le deuxième processus de logique floue peut alors être mis en oeuvre afin de fusionner les probabilités robustes PRST et PRSF estimées à partir des premier et deuxième algorithmes 3 et 4. Comme pour le premier processus de logique floue mis en oeuvre dans la phase de prétraitement, ce processus utilise les trois phases connues de la logique floue (fuzzification, conditions et défuzzification), telle que représentées sur la figure 3.

Ainsi, les valeurs de probabilité robustes PRST et PRSF soumises en entrée au processus de logique floue sont d'abord transformées pour obtenir des variables linguistiques correspondantes, respectivement T et F. On sépare les deux variables en deux niveaux (haut et bas). Ainsi, chacune des variables peut prendre deux valeurs linguistiques, respectivement une valeur « haute » Thigh, Fhigh, pour les cas de « roue dégonflée » et une valeur « basse » Tlow, Flow, pour les cas de « roue non dégonflée ». L'utilisation de ces deux valeurs linguistiques permet ainsi de traiter les deux cas possibles avec des conditions simples et directes.

Ainsi, après l'étape de fuzzification en 20, les quatre valeurs linguistiques Thigh, Tlow, Fhigh et Flow sont soumises à un moteur d'inférence en 21 permettant de fusionner les quatre valeurs linguistiques pour obtenir quatre nouvelles valeurs de condition :

C1 = MIN(Thigh,Fhigh)
C2 = MIN(Tlow,Flow)
C3 = MIN(Tlow,Fhigh)
C4 = MIN(Thigh,Flow)

Le résultat du traitement effectué par le moteur d'inférence en 21 est soumis à une étape de défuzzification en 22, fournissant en sortie une valeur de probabilité robuste fusionnée PNRT pour chaque roue, résultant de la fusion des quatre valeurs de condition avec les quatre paramètres flous calculés dans le bloc 5 générateur de paramètres. Un exemple de mise en oeuvre est d'utiliser la moyenne.

Cette valeur de probabilité robuste fusionnée par roue PNRT est fournie à un bloc référencé PHASE sur la figure 1, conçu pour traiter la valeur de probabilité robuste PNRT pour chaque roue en incrémentant ou décrémentant un signal de compteur PNT pour chaque roue à chaque détection ou non détection d'un défaut de pression pneumatique selon la valeur de probabilité robuste, de façon à permettre d'adapter la vitesse de détection en fonction des besoins. Le signal de compteur PNT par roue est ensuite utilisé en sortie du bloc PHASE par un intégrateur de contrôle (un intégrateur de contrôle par roue) prévu pour contrôler l'état de gonflage du pneumatique de la roue concernée, dont le signal de sortie représente l'intégrale du signal d'entrée en ce qui concerne la durée, soit la valeur totale accumulée dans le temps. Lorsqu'un défaut de pression pneumatique est détecté sur une roue au travers du signal de sortie de l'intégrateur de contrôle associé, une alerte globale est déclenchée.

## Revendications

1. Procédé d'estimation de l'apparition d'un défaut de pression sur au moins un des pneumatiques équipant des roues d'un véhicule automobile, ladite estimation résultant d'une analyse des vitesses angulaires des roues selon un premier algorithme (3) basé sur une analyse de l'écart de vitesses entre chacune des roues et selon un deuxième algorithme (4) basé sur une analyse spectrale de la vitesse de roue, dans lequel chacun des premier et deuxième algorithmes fournit, pour chaque roue, des valeurs de probabilité de sous-gonflage (PT, PF) définies pour chaque plage de vitesse d'une pluralité de plages de vitesse de la roue et un taux de confiance (CT, CF) associé à chaque valeur de probabilité fournie dépendant du temps de roulage de la roue dans la plage de vitesse concernée, ledit procédé étant **caractérisé en ce qu'**il utilise un module de décision (1) basé sur la théorie des sous-ensembles flous dont les signaux d'entrée sont les valeurs de probabilité de sous-gonflage (PT, PF) issues du premier et du deuxième algorithme ainsi que les taux de confiance associés (CT, CF), ledit module de décision (1) fournissant une valeur de probabilité robuste (PRST, PRSF) indicative dudit défaut de pression prenant en compte toutes les plages de vitesse pour chaque roue et chaque algorithme.

2. Procédé selon la revendication 1, **caractérisé en ce qu'**il comprend une étape de fusion (TEMP, FREQ) des valeurs de probabilité de sous-gonflage (PT, PF) et de taux de confiance associés (CT, CF) issues du premier et du second algorithme (3, 4), utilisant un premier processus de logique floue (10, 11, 12) pour déterminer des valeurs de probabilité robuste intermédiaire (PRT, PRF) pour une plage de vitesse donnée et une roue donnée ayant intégrées les valeurs de taux de confiance, respectivement pour chaque couple de valeurs de probabilité (PT, PF) et de taux de confiance associé (CT, CF) issu du premier algorithme (3) et pour chaque couple de valeurs de probabilité (PT, PF) et de taux de confiance associé (CT, CF) issu du deuxième algorithme (4).

3. Procédé selon la revendication 2, **caractérisé en ce qu'**il comprend une étape de sélection (SPVT, SPVF) consistant à sélectionner la valeur de probabilité robuste intermédiaire maximum pour chaque algorithme (3, 4) afin de déterminer lesdites valeurs de probabilité robuste (PRST, PRSF) prenant en compte toutes les plages de vitesse pour chaque roue et chaque algorithme.

4. Procédé selon l'une quelconque des revendications précédentes, **caractérisé en ce qu'**il comprend une étape de fusion (MIXER) des valeurs de probabilité robuste (PRST, PRSF) estimées à partir des premier et deuxième algorithmes (3, 4), ladite étape de fusion utilisant un deuxième processus de logique floue (20, 21, 22) fournissant en sortie une valeur de probabilité robuste fusionnée pour chaque roue (PNTR).

5. Procédé selon la revendication 4, **caractérisé en ce qu'**il comprend une étape consistant à définir des relations à paramètres flous (A, B, C, D), destinées à être utilisées dans le deuxième processus de logique floue pour pondérer la fusion des valeurs de probabilité robuste (PRST, PRSF) en fonction de paramètres de mise au point (TH, TL, FH, FL) représentant les poids respectifs des premier et deuxième algorithmes (3, 4) dans l'estimation de chaque situation du véhicule en termes de nombre de roues ayant un défaut de pression pneumatique.

6. Procédé selon la revendication 4 ou 5, **caractérisé en ce que** la valeur de probabilité robuste fusionnée pour chaque roue (PNTR) est utilisé pour diagnostiquer l'état de gonflage des pneumatiques de chaque roue du véhicule.

7. Système de surveillance de la pression des pneumatiques équipant les roues d'un véhicule automobile du type comportant un premier algorithme (3) d'estimation de l'apparition d'un défaut de pression sur au moins un des pneumatiques basé sur une analyse de l'écart de vitesses entre chacune des roues et un deuxième algorithme (4) d'estimation de l'apparition d'un défaut de pression sur au moins un des pneumatiques basé sur une analyse spectrale de la vitesse de roue, chacun des premier et deuxième algorithmes étant adapté pour fournir pour chaque roue du véhicule, des valeurs de probabilité de sous-gonflage (PT, PF) définies pour chaque plage de vitesse d'une pluralité de plages de vitesse de la roue et un taux de confiance (CT, CF) associé à chaque valeur de probabilité fournie dépendant du temps de roulage de la roue dans la plage de vitesse concernée, ledit système étant **caractérisé en ce qu'**il comprend un module de décision (1) basé sur la théorie des sous-ensembles flous dont les signaux d'entrée sont les valeurs de probabilité de sous-gonflage (PT, PF) issues du premier et du deuxième algorithme ainsi que les taux de confiance associés (CT, CF), ledit module de décision (1) étant apte à fournir une valeur de probabilité robuste (PRST, PRSF) indicative dudit défaut de pression prenant en compte toutes les plages de vitesse pour chaque roue et chaque algorithme.

8. Système selon la revendication 7, **caractérisé en ce que** le module de décision comprend des moyens de fusion (MIXER) des valeurs de probabilité robuste (PRST, PRSF) estimées à partir des premier et deuxième algorithmes (3, 4), lesdits moyens de fusion utilisant un deuxième processus de logique floue (20, 21, 22) fournissant en sortie une valeur de probabilité robuste fusionnée pour chaque roue (PNTR).

**Patentansprüche**

1. Verfahren zur Schätzung des Auftretens eines Druckmangels bei mindestens einem der zur Ausstattung der Räder eines Kraftfahrzeugs gehörenden Luftreifen, wobei die Schätzung aus einer Analyse der Winkelgeschwindigkeiten der Räder gemäß einem ersten Algorithmus (3) basierend auf einer Analyse der Geschwindigkeitsabweichung zwischen jedem der Räder und gemäß einem zweiten Algorithmus (4) basierend auf einer Spektralanalyse der Radgeschwindigkeit resultiert, wobei jeder der ersten und zweiten Algorithmen für jedes Rad Reifenunterdruck-Wahrscheinlichkeitswerte (PT, PF), die für jeden Geschwindigkeitsbereich einer Vielzahl von Geschwindigkeitsbereichen des Rads definiert sind, und eine jedem gelieferten Wahrscheinlichkeitswert zugeordnete Vertrauensrate (CT, CF) liefert, die von der Fahrzeit des Rads im betroffenen Geschwindigkeitsbereich abhängt, wobei das Verfahren **dadurch gekennzeichnet ist, dass** es ein Entscheidungsmodul (1) basierend auf der Theorie unscharfer Teilmengen verwendet, dessen Eingangssignale die vom ersten und zweiten Algorithmus stammenden Reifenunterdruck-Wahrscheinlichkeitswerte (PT, PF) sowie die zugeordneten Vertrauensraten (CT, CF) sind, wobei das Entscheidungsmodul (1) einen den Druckmangel anzeigenden robusten Wahrscheinlichkeitswert (PRST, PRSF) liefert, unter Berücksichtigung aller Geschwindigkeitsbereiche für jedes Rad und jedes Algorithmus.

2. Verfahren nach Anspruch 1, **dadurch gekennzeichnet, dass** es einen Schritt der Vereinigung (TEMP, FREQ) der Reifenunterdruck-Wahrscheinlichkeitswerte (PT, PF) und zugeordneter Vertrauensraten (CT, CF) enthält, die vom ersten und vom zweiten Algorithmus (3, 4) stammen, unter Verwendung eines ersten Fuzzy-Logik-Prozesses (10, 11, 12), um robuste Zwischenwahrscheinlichkeitswerte (PRT, PRF) für einen gegebenen Geschwindigkeitsbereich und ein gegebenes Rad zu bestimmen, die die Werte von Vertrauensraten für jedes Paar von Wahrscheinlichkeitswerten (PT, PF) und von einer vom ersten Algorithmus (3) stammenden zugeordneten Vertrauensrate (CT, CF) bzw. für jedes Paar von Wahrscheinlichkeitswerten (PT, PF) und von einer vom zweiten Algorithmus (4) stammenden zugeordneten Vertrauensrate (CT, CF) eingefügt haben.

3. Verfahren nach Anspruch 2, **dadurch gekennzeichnet, dass** es einen Auswahlschritt (SPVT, SPVF) enthält, der darin besteht, den maximalen robusten Zwischenwahrscheinlichkeitswert für jeden Algorithmus (3, 4) auszuwählen, um die robusten Wahrscheinlichkeitswerte (PRST, PRSF) unter Berücksichtigung aller Geschwindigkeitsbereiche für jedes Rad und jedes Algorithmus zu bestimmen.

4. Verfahren nach einem der vorhergehenden Ansprüche, **dadurch gekennzeichnet, dass** es einen Schritt der Vereinigung (MIXER) der robusten Wahrscheinlichkeitswerte (PRST, PRSF) enthält, die ausgehend von den ersten und zweiten Algorithmen (3, 4) geschätzt werden, wobei der Vereinigungsschritt einen zweiten Fuzzy-Logik-Prozess (20, 21, 22) verwendet, der am Ausgang einen vereinigten robusten Wahrscheinlichkeitswert für jedes Rad (PNTR) liefert.

5. Verfahren nach Anspruch 4, **dadurch gekennzeichnet, dass** es einen Schritt enthält, der darin besteht, Beziehungen mit Fuzzy-Parametern (A, B, C, D) zu definieren, die dazu bestimmt sind, im zweiten Fuzzy-Logik-Prozess verwendet zu werden, um die Vereinigung der robusten Wahrscheinlichkeitswerte (PRST, PRSF) abhängig von Einstellungsparametern (TH, TL, FH, FL) zu gewichten, die die Gewichte der ersten und zweiten Algorithmen (3, 4) in der Schätzung jeder Situation des Fahrzeugs bezüglich der Anzahl von Rädern mit einem Luftreifen-Druckmangel darstellen.

6. Verfahren nach Anspruch 4 oder 5, **dadurch gekennzeichnet, dass** der vereinigte robuste Wahrscheinlichkeitswert für jedes Rad (PNTR) verwendet wird, um den Reifendruck der Luftreifen jedes Rads des Fahrzeugs zu diagnostizieren.

7. System zur Überwachung des Drucks der die Räder eines Kraftfahrzeugs ausstattenden Luftreifen von der Art, das einen ersten Algorithmus (3) zur Schätzung des Auftretens eines Druckmangels bei mindestens einem der Luftreifen basierend auf einer Analyse der Geschwindigkeitsabweichung zwischen jedem der Räder und einen zweiten Algorithmus (4) zur Schätzung des Auftretens eines Druckmangels bei mindestens einem der Luftreifen basierend auf einer Spektralanalyse der Radgeschwindigkeit aufweist, wobei jeder der ersten und zweiten Algorithmen geeignet ist, für jedes Rad des Fahrzeugs Reifenunterdruck-Wahrscheinlichkeitswerte (PT, PF), die für jeden Geschwindigkeitsbereich einer Vielzahl von Geschwindigkeitsbereichen des Rads definiert sind, und eine jedem gelieferten Wahrscheinlichkeitswert zugeordnete Vertrauensrate (CT, CF) zu liefern, die von der Fahrzeit des Rads im betroffenen Geschwindigkeitsbereich abhängt, wobei das System **dadurch gekennzeichnet ist, dass** es ein Entscheidungsmodul (1) enthält, das auf der Theorie unscharfer Teilmengen basiert, dessen Eingangssignale die vom ersten und zweiten Algorithmus stammenden Reifenunterdruck-Wahrscheinlichkeitswerte (PT, PF) sowie die zugeordneten Vertrauensraten (CT, CF) sind, wobei das Entscheidungsmodul (1) einen robusten Wahrscheinlichkeitswert (PRST, PRSF) liefern kann, der den Druckmangel anzeigt, unter Berücksichtigung aller Geschwindigkeitsbereiche für jedes Rad und jedes Algorithmus.

8. System nach Anspruch 7, **dadurch gekennzeichnet, dass** das Entscheidungsmodul Vereinigungseinrichtungen (MIXER) der ausgehend von den ersten und zweiten Algorithmen (3, 4) geschätzten robusten Wahrscheinlichkeitswerte (PRST, PRSF) enthält, wobei die Vereinigungseinrichtungen einen zweiten Fuzzy-Logik-Prozess (20, 21, 22) verwenden, der am Ausgang einen vereinigten robusten Wahrscheinlichkeitswert für jedes Rad (PNTR) liefert.

**Claims**

1. Method of estimating the appearance of a pressure defect in at least one of the tires equipping the wheels of a motor vehicle, said estimate resulting from an analysis of the angular speeds of the wheels in accordance with a first algorithm (3) based on an analysis of the speed difference between the wheels and in accordance with a second algorithm (4) based on a spectral analysis of the wheel speed, wherein each of the first and second algorithms supplies underinflation probability values (PT, PF) for each wheel defined for each speed range of a plurality of wheel speed ranges and a confidence factor (CT, CF) associated with each probability value supplied depending on the rolling time of the wheel in the relevant speed range, said method being **characterized in that** it utilizes a decision module (1) based on the theory of fuzzy subsets the input signals of which are the underinflation probability values (PT, PF) originating from the first and second algorithms and the associated confidence factors (CT, CF), said decision module (1) supplying a robust probability value (PRST, PRSF) indicative of said pressure defect taking account of all the speed ranges for each wheel and each algorithm.

2. Method according to Claim 1, **characterized in that** it includes a step (TIME, FREQ) of merging the underinflation probability values (PT, PF) and associated confidence factors (CT, CF) originating from the first and second algorithms (3, 4) utilizing a first fuzzy-logic process (10, 11, 12) to determine intermediate robust probability values (PRT, PRF) for a given speed range and a given wheel having integrated the respective confidence factors for each pair of probability value (PT, PF) and associated confidence factor (CT, CF) originating from the first algorithm (3) and for each pair of probability value (PT, PF) and associated confidence factor (CT, CF) originating from the second algorithm (4).

3. Method according to Claim 2, **characterized in that** it includes a selection step (SPVT, SPVF) consisting in selecting the maximum intermediate robust probability value for each algorithm (3, 4) in order to determine said robust probability values (PRST, PRSF) taking account of all the speed ranges for each wheel and each algorithm.

4. Method according to any one of the preceding claims, **characterized in that** it includes a step (MIXER) of merging the robust probability values (PRST, PRSF) estimated using the first and second algorithms (3, 4), said merging step utilizing a second fuzzy-logic process (20, 21, 22) supplying as output a merged robust probability value (PNTR) for each wheel.

5. Method according to Claim 4, **characterized in that** it includes a step consisting in defining relations with fuzzy parameters (A, B, C, D) intended to be utilized in the second fuzzy-logic process to weight the merging of the robust probability values (PRST, PRSF) as a function of development parameters (TH, TL, FH, FL) representing the respective weights of the first and second algorithms (3, 4) in the estimation of each situation of the vehicle in terms of the number of wheels having a tire pressure defect.

6. Method according to Claim 4 or 5, **characterized in that** the merged robust probability value (PNTR) for each wheel is utilized to diagnose the state of inflation of the tire of each wheel of the vehicle.

7. System for monitoring the pressure of the tires equipping the wheels of a motor vehicle, of the type including a first algorithm (3) for estimating the appearance of a pressure defect in at least one of the tires based on an analysis of the speed difference between the wheels and a second algorithm (4) for estimating the appearance of a pressure defect in at least one of the tires based on a spectral analysis the wheel speed, each of the first and second algorithms being adapted to supply underinflation probability values (PT, PF) for each wheel of the vehicle defined for each speed range of a plurality of speed ranges of the wheel and a confidence factor (CT, CF) associated with each probability value supplied depending on the rolling time of the wheel in the relevant speed range, said system being **characterized in that** it includes a decision module (1) based on the theory of fuzzy subsets the input signals of which are the underinflation probability values (PT, PF) originating from the first and second algorithms and the associated confidence factors (CT, CF), said decision module (1) being adapted to supply a robust probability value (PRST, PRSF) indicative of said pressure defect taking account of all the speed ranges for each wheel and each algorithm.

8. System according to Claim 7, **characterized in that** the decision module includes means (MIXER) for merging the robust probability values (PRST, PRSF) estimated using the first and second algorithms (3, 4), said merging means utilizing a second fuzzy-logic process (20, 21, 22) supplying as output a merged robust probability value (PNTR) for each wheel.

## Fig.1

## Fig.2

Fig.3

**EP 3 068 635 B1**

**Documents brevets cités dans la description**

- FR 2927018
- WO 2012127139 A
- US 2007061100 A
- JP H06320923 B